# EUROPEAN PATENT APPLICATION

(11) **EP 2 157 499 A1**
(43) Date of publication of application: **24.02.2010**
(21) Application number: 08166408.8
(22) Date of filing: 10.10.2008
(51) Int. Cl.: G06F 3/042

(54) **Optical diode laser touch-control device**

(30) Priority: 21.08.2008 TW 97131865
(71) Applicant: TPK Touch Solutions Inc., Taipei (TW)
(72) Inventor: Su, Sheng-Pin, Taipei (TW); Wei, Tsai-Kuei, Taipei (TW)
(74) Representative: Kühn, Armin

(57) **Abstract**

An optical diode laser touch-control device configures two light emitters and a plurality of receivers about a touch-acting area of a touch panel. The light emitters are disposed on two adjacent corners of the touch panel in the touch-acting area, and each employs a diode laser to continuously project a diffused light through a lens for covering the touch-acting area to form an interlaced touch screen. The receivers are disposed on the touch panel about the touch-acting area respectively, where they can receive the diffused light, to receive the diffused light. The finger touches the touch-acting area of the touch panel to prevent a part of the diffused light from projecting to the receivers for calculating the touch position of the touch-acting area.

## Description

### BACKGROUND

### 1. Field of the Invention

The present invention relates to an optical touch-control device of a touch panel, and more particularly, to a touch-control technology, which employs a diode laser cooperating with the triangulation method to detect the touch position of the touch panel.

### 2. Description of the Related Art

The current input modes for touch panel include a resistive mode, a capacitive mode and an optical mode, etc. The resistive mode and the capacitive mode thereof touch the surface of the touch panel by a finger to make the change of the voltage and the current related to the touch position of the touch panel for detecting the touch position of the touch panel to perform the input operation.

However, in conventional touch panel employing the resistive or capacitive input mode, the touch-control structure thereof is consisted of a plurality of thin-film layers, and the transparent capabilities (such as the transparency, the color distortion, the reflective property and the resolution, etc.) of the thin-film layers are directly related to the visual effect of the touch panel. Therefore, the conventional touch panel employing the resistive or capacitive touch-control input mode, inevitably reduces the visual effect thereof. Furthermore, the surface of the touch panel must be touched by the finger, even be pressed by the stress, to ensure the input effect. Thus, it will scratch and damage the surface of the touch panel, and impact the transparent capabilities of the touch panel.

In addition, the conventional touch panel employing the optical input mode, uses light to detect the touch position of the surface of the touch panel, which is touched by the finger; thus will not impact the transparent capabilities of the touch panel, and achieve the better visual effect compared with the touch panel employing the resistive or capacitive touch-control input mode. Furthermore, the implementation of the optical input mode includes the triangulation method (such as the US2001/0055006A1 patent), the optical distance time difference measuring method (such as the US5196835 patent, the CN1568452A patent, etc.), the on-off directly reading method (such as the US7133031 patent, the CN200510097130.2 patent, etc.) and the image interpretation method (such as the US20050275618 patent, the US7242388 patent).

For the above triangulation method, the touch-control technology disclosed in the US2001/0055006A1 patent, mainly employs an actuator (motor or oscillator) to continuously rotate or oscillate a polygon mirror for reflecting the focused light emitted from a diode laser, such that several reflective materials about the periphery of the touch panel are scanned, and the light reflected by the reflective materials are indirectly received by a photo-detector, which is integrated with the diode laser in a module, to detect the touch position of the surface of the touch panel. However, the disadvantage thereof is that the electromagnetic waves generated in the motor and oscillator operation will greatly interfere the communication quality of the electrical products using the touch panel. Furthermore, the bulk and the power consumption of the motor and the oscillator are not small, thus will be disadvantageous for the light weight and energy-saving design of the products. In addition, since the diode laser and the photo-detector are integrated in the same module, the photo-detector only can receive the light reflected by the reflective materials in the special angle. Thus the light is not enough, and the signal noise ratio is bad, which should be improved.

What is needed, is providing an optical diode laser touch-control device, which can solve the above problems.

### BRIEF SUMMARY

To solve the problems disclosed in the prior art, the present invention provides an optical diode laser touch-control device, particularly employing the continuous interlaced light and the way of directly sensing the interlaced light to perform the touch detection and determine the touch position by cooperating with the triangulation method for being advantageous for the light weight and energy-saving design of the electrical products.

Therefore, an optical diode laser touch-control device disclosed in the present invention, comprises:
a touch panel having a touch-acting area;
two light emitters disposed on two adjacent corners of the touch panel respectively;
two diode lasers, each being combined in the corresponding light emitter respectively by a semiconductor packaging technology;
two lenses, each being combined on the corresponding light emitter respectively by the semiconductor packaging technology and being arranged between the diode laser and the touch-acting area, dot-shaped focused light emitted continuously from the diode laser being refracted by the lens to continuously emit a diffused light to cover the touch-acting area for forming an interlaced touch screen; and
a plurality of receivers disposed on the touch panel about the touch-acting area respectively, where can receive the diffused light, to receive the diffused light.

Thereby, the finger touches the touch-acting area to penetrate through the touch screen for preventing a part of the diffused light from projecting to the receivers, such that the receivers sense and obtain the signal related to two changes of light shadow, which be calculated the touch position of the touch-acting area by cooperating with the triangulation method.

Another optical diode laser touch-control device disclosed in the present invention, comprises:
a touch panel having a touch-acting area;
two diode lasers disposed on two adjacent corners of the touch panel respectively; and
two lenses, each being arranged between the diode laser and the touch-acting area respectively and being combined with the diode laser by a semiconductor packaging technology, dot-shaped focused light emitted continuously from the diode laser being refracted by the lens to continuously emit a diffused light to cover the touch-acting area for forming an interlaced touch screen; and
a plurality of receivers disposed on the touch panel about the touch-acting area respectively, where can receive the diffused light, to receive the diffused light.

Thereby, the finger touches the touch-acting area to penetrate through the touch screen for preventing a part of the diffused light from projecting to the receivers, such that the receivers sense and obtain the signal related to two changes of light shadow, which be calculated the touch position of the touch-acting area by cooperating with the triangulation method.

From the above it can be seen that, the present invention packages or integrates the diode laser and the lens into the light emitter, which are used as the light source, to directly emit the diffused light for covering the touch-acting area. Thus the present invention can omit the large devices of the prior art, such as the motor and the oscillator, etc., to ensure the communication quality of the products, and can reduce the bulks of the diode laser and the lens to achieve the purpose for the light weight and energy-saving design of the electrical products. Simultaneously, the present invention employs the receivers to directly sense the change of the diffused light to replace the reflective materials of the above prior art, such that the input sense resolution of the touch panel can be improved.

Wherein, the section of the lens represents a cambered surface to make the diffused light represent straight-line shaped. Alternatively, the section of the lens represents a plurality of cambered surface to make the diffused light represent broken-line shaped. Alternatively, the lens is a Fresnel lens to make the diffused light represent dot-line shaped. More particularly, the Fresnel lens may be an imaging lens for generating Moiré patterns. In addition, the diffused light is invisible light, such as infrared light or ultraviolet light, etc. Furthermore, the receivers are arranged about the touch-acting area to represent ┌┐ shaped.

Other optical diode laser touch-control device disclosed in the present invention, comprises:
a touch panel having a touch-acting area;
two light emitters disposed on two adjacent corners of the touch panel respectively, each continuously projecting a diffused light to cover the touch-acting area for forming an interlaced touch screen; and
a plurality of receivers disposed on the touch panel about the touch-acting area respectively, where can receive the diffused light, to receive the diffused light.

Thereby, the finger touches the touch-acting area to penetrate through the touch screen for preventing a part of the diffused light from projecting to the receivers, such that the receivers sense and obtain the signal related to two changes of light shadow, which be calculated the touch position of the touch-acting area by cooperating with the triangulation method.

From the above it can be seen that, the present invention employs the light emitter to directly emit the diffused light for covering the touch-acting area. Thus the present invention can achieve many properties, such as the communication quality, reducing the bulk, the light weight, saving the power, and the improved sensing resolution, etc.

Wherein, the diffused light represents straight-line shaped, broken-line shaped, or dot-line shaped. In addition, the diffused light is invisible light, such as infrared light or ultraviolet light, etc. Furthermore, the receivers are arranged about the touch-acting area to represent ┌┐ shaped.

However, for assuredly and adequately disclosing the present invention, preferable embodiments are particularized. The detailed description is described thereinafter by cooperating with FIGS.

### BRIEF DESCRIPTION OF THE DRAWINGS

The accompanying drawings are included to provide a further understanding of the invention, and are incorporated in and constitute part of this specification. The drawings illustrate embodiments of the invention and, together with the description, serve to explain the principles of the invention.

FIG. 1 is a schematic, structure view of a preferable embodiment of the present invention.

FIG. 2 is a schematic view for showing the related position between the light emitter and the receivers of the present invention.

FIG. 3 is a schematic, structure view of the diode laser and the lens of the present invention.

FIG. 4 is a cross-sectional view of the light emitter of the present invention.

FIG. 5 is a tridimensional view of a lens of the present invention.

FIG. 6 is a schematic view for showing the lens of FIG. 5 emitting the diffused light, which represents straight-line shaped, to project on the receivers.

FIG. 7 is a schematic view for showing the finger touching the touch-acting area of the present invention to shade the diffused light.

FIG. 8 is another schematic view for showing the finger touching the touch-acting area of the present invention to shade the diffused light.

FIG. 9 is a tridimensional view of another lens of the present invention.

FIG. 10 is a schematic view for showing the lens of FIG. 9 emitting the diffused light, which represents broken-line shaped, to project on the receivers.

FIG. 11 is a tridimensional view of other lens of the present invention.

FIG. 12 is a schematic view for showing the lens of FIG. 11 emitting the diffused light, which represents dot-line shaped, to project on the receivers.

### DETAILED DESCRIPTION

Reference will now be made to the drawings to describe exemplary embodiments of the present optical diode laser touch-control device, in detail. The following description is given by way of example, and not limitation.

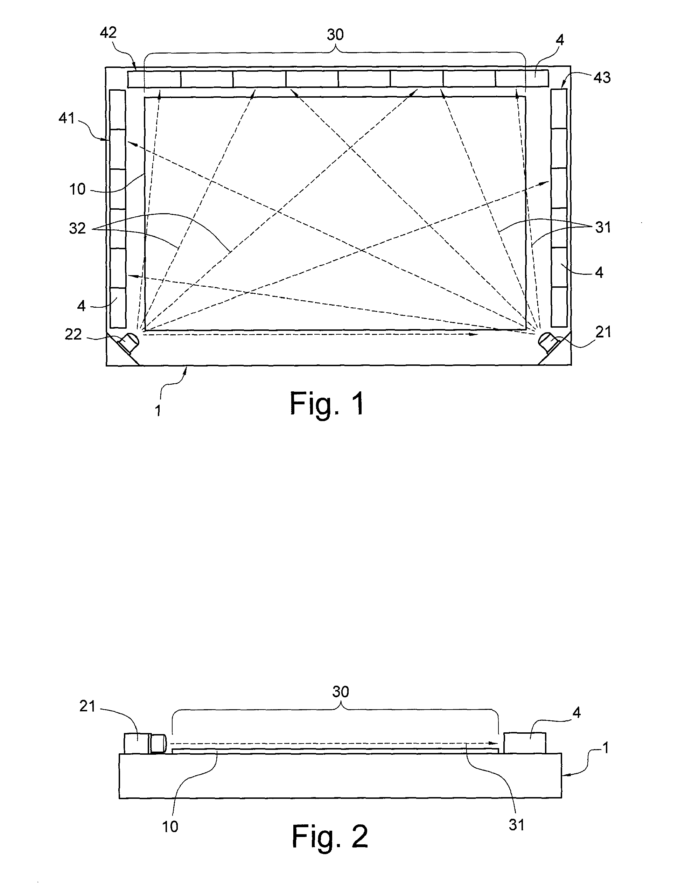

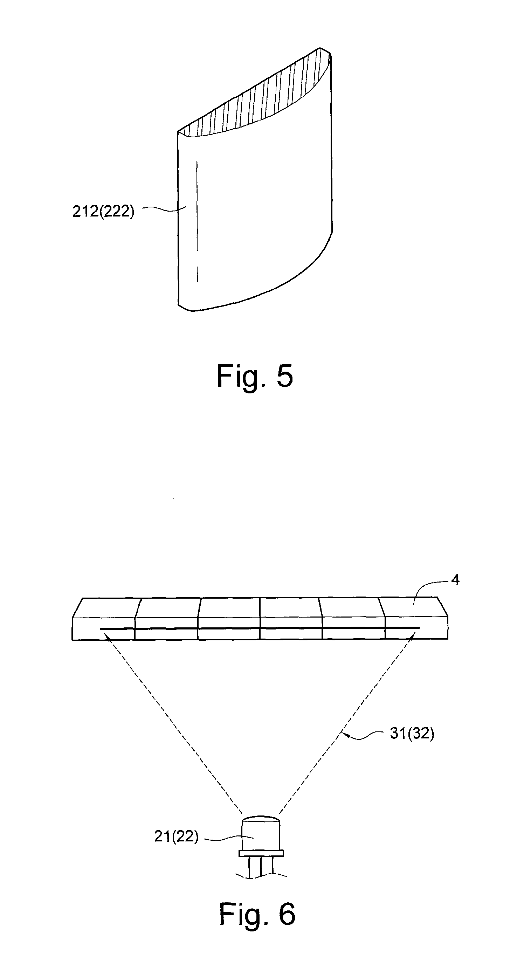

Referring to FIG. 1, which is a schematic, structure view for showing a preferable embodiment of the present invention, an optical diode laser touch-control device of the present invention is described by cooperating with FIG. 2. The optical diode laser touch-control device includes a touch panel 1, a first light emitter 21, a second light emitter 22 and a plurality of receivers 4. A touch-acting area 10 is defined on a surface of the touch panel 1. The first and second light emitters 21, 22 are disposed on two adjacent corners of the touch panel 1 respectively, and are configured for continuously emitting a diffused light 31, 32 (cooperating with FIG. 6) respectively to cover the area above the surface of the touch-acting area 10, such that the diffused light 31, 32 emitted from the first and second light emitters 21, 22 form an interlaced touch screen 30 above the surface of the touch-acting area 10. The receivers 4 are respectively disposed on the surface of the touch panel 1 about the periphery of the touch-acting area 10, where can receive the diffused light 31, 32, to receive the diffused light 31, 32.

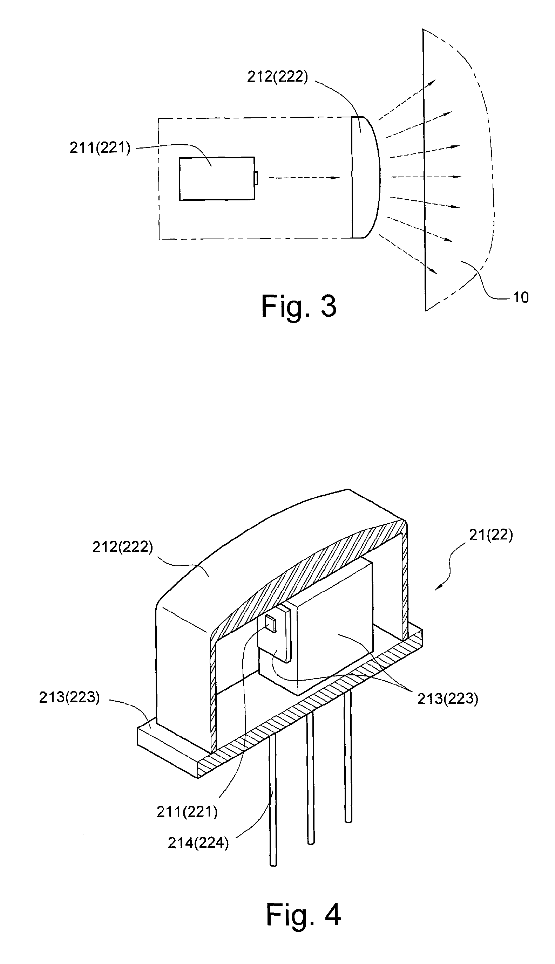

Referring to FIG. 3, which is a more detailed embodiment, each of the first and second light emitters 21, 22 includes a diode laser 211, 221 and a lens 212, 222. The lens 212 is arranged between the diode laser 211 and the touch-acting area 10, and is combined with the diode laser 211 by the semiconductor packaging technology, such that the lens 212 is packaged on a front end of the diode laser 211. Furthermore, the dot-shaped focused light emitted continuously by the diode laser 211 can be refracted by lens 212 to continuously emit the diffused light 31. Similarly, the lens 222 is also arranged between the diode laser 221 and the touch-acting area 10, and is combined with the diode laser 221 by the semiconductor packaging technology, such that the lens 222 is packaged on a front end of the diode laser 221. Furthermore, the dot-shaped focused light emitted continuously by the diode laser 221 can be refracted by lens 222 to continuously emit the diffused light 32.

Wherein, angles with 10-80 degrees (as shown in FIG. 1) are represented between the projection directions of the light emitted from the first light emitter 21 and the boundary of the touch-acting area 10. Angles with 10-80 degrees are represented between the projection directions of the light emitted from the second light emitter 22 and the boundary of the touch-acting area 10. In a preferable embodiment, angles with 45 degrees are represented between the light emitters 21, 22 and the boundary of the touch-acting area 10 respectively.

Referring to another embodiment as shown in FIG. 4, the diode laser 211 is combined in the first light emitter 21 by the semiconductor packaging technology. The lens 212 is combined on the first light emitter 21 by the semiconductor packaging technology. Furthermore, a heat sink 213 and a plurality of pins 214 are arranged on the bottom of the first light emitter 21. The diode laser 221 is combined in the second light emitter 22 by the semiconductor packaging technology. The lens 222 is combined on the second light emitter 22 by the semiconductor packaging technology. Furthermore, a heat sink 223 and a plurality of pins 224 are arranged on the bottom of the second light emitter 22.

The sections of the lenses 212, 222 of the first and second light emitters 21, 22 represent a cambered surface (as shown in FIG. 5), such that the diffused light 31, 32 emitted from the first and second light emitters 21, 22 represents straight-line shaped to project on the receivers 4 (as shown in FIG. 6).

The diffused light 31, 32 may be invisible light, such as infrared light or ultraviolet light, etc. Furthermore, the receivers 4 are arranged about the touch-acting area 10 to represent a ┌┐-shaped (as shown in FIG. 1), such that a first receiving area 41, a second receiving area 42 and a third receiving area 43 are formed in the periphery of the touch-acting area 10 in sequence. The diffused light 31 of the first light emitter 21 may be projected on the first receiving area 41 and the second receiving area 42, and the diffused light 32 of the second light emitter 22 may be projected on the second receiving area 42 and the third receiving area 43.

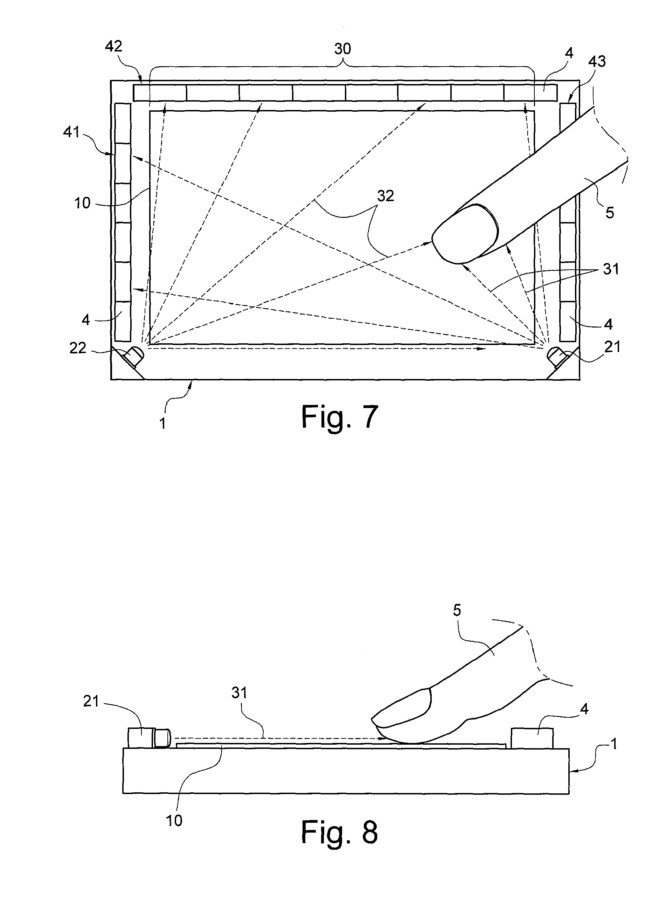

The present invention is performed by the composition of the above elements. More particularly, when the finger 5 of the user touches the touch-acting area 10 of the touch panel 1 (as shown in FIGS. 7 and 8), the finger 5 will penetrate through the touch screen 30 to prevent a part of the light 31 from projecting to the receivers 4 of the first receiving area 41 and the second receiving area 42, and prevent a part of the light 32 from projecting to the receivers 4 of the second receiving area 42 and the third receiving area 43, such that the receivers 4 sense the signal related to two changes of light shadow, and output the signal to an outside signal processor (not shown), which is calculated by cooperating with the triangulation method to determine the touch position of the surface of the touch-acting area 10 of the touch panel 1 for performing the touch-control operation.

From the above it can be seen, the present invention packages or integrate the diode lasers 211, 221 and the lenses 212, 222 into the light emitters 21, 22, which are used as the light sources, to directly emit the diffused light 31, 32 for covering the touch-acting area 10. Thus the present invention can omit the motor and the oscillator of the prior art to ensure the communication quality of the products, and can reduce the bulks of the diode lasers 211, 221 and the lenses 212, 222 to achieve the purpose for the light weight and energy-saving design of the electrical products. Simultaneously, the present invention employs the receivers 4 to directly sense the change of the light 31, 32 to replace the reflective materials of the prior art, such that the input sense resolution of the touch panel is improved.

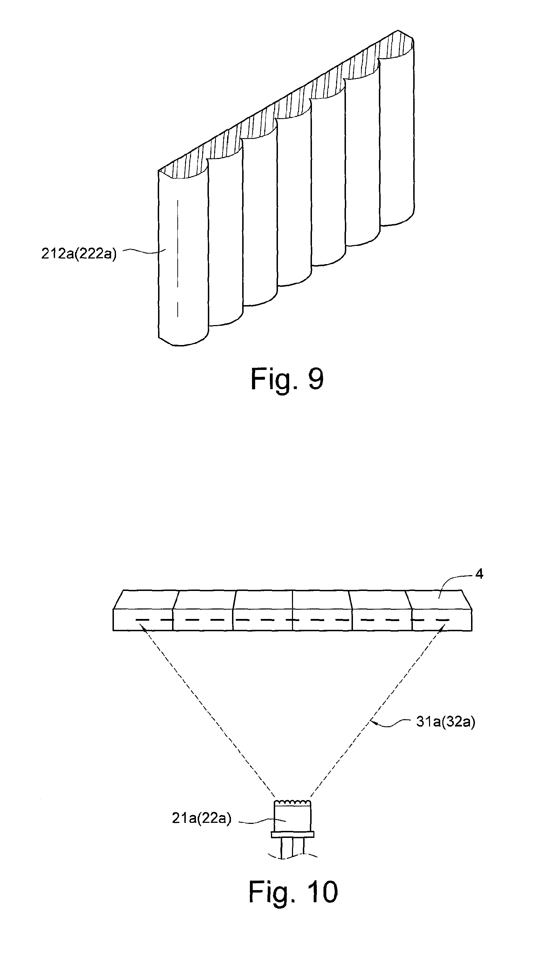

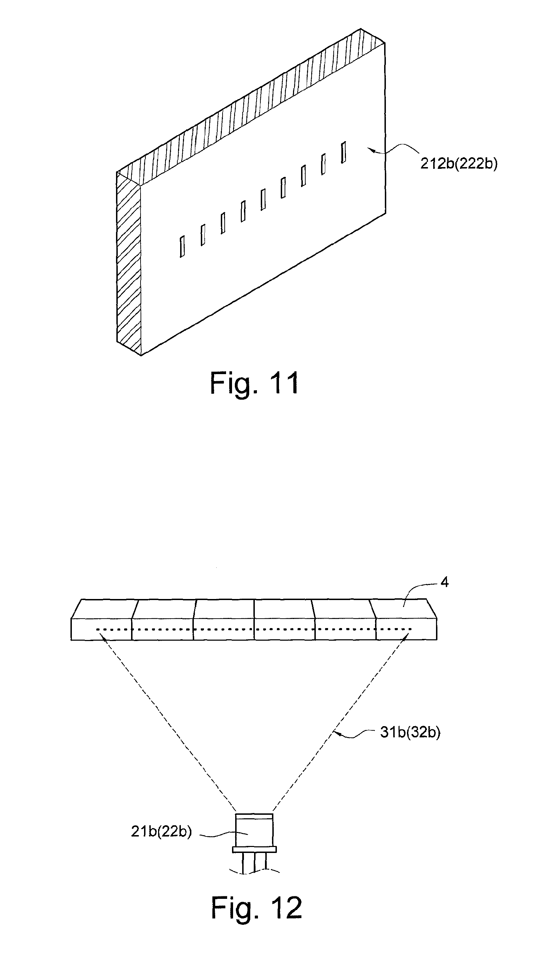

In addition, as shown in FIG. 9, the sections of the lenses 212a, 222a of the first and second light emitters 21a, 22a may also represent a plurality of cambered surfaces in parallel, such that the diffused light 31a, 32a emitted from the first and second light emitters 21a, 22a represents broken-line shaped to project on the receives 4 (as shown in FIG. 10). The other elements and the implemental mode are similar to those of the above embodiment. Alternatively, as shown in FIG. 11, the lenses 212b, 222b of the first and second light emitters 21b, 22b may also be a Fresnel lens, which is an imaging lens configured for generating Moiré patterns, such that the diffused light 31b, 32b emitted from the first and second light emitters 21b, 22b represents dot-line shaped to project on the receivers 4 (as shown in FIG. 12). The other elements and the implemental mode are similar to those of the above embodiment.

The above description is given by way of example, and not limitation. Given the above disclosure, one skilled in the art could devise variations that are within the scope and spirit of the invention disclosed herein, including configurations ways of the recessed portions and materials and/or designs of the attaching structures. Further, the various features of the embodiments disclosed herein can be used alone, or in varying combinations with each other and are not intended to be limited to the specific combination described herein. Thus, the scope of the claims is not to be limited by the illustrated embodiments.

## Claims

1. An optical diode laser touch-control device, comprising:
a touch panel having a touch-acting area;
two light emitters disposed on two adjacent corners of the touch panel respectively;
two diode lasers, each being combined in the corresponding light emitter respectively by a semiconductor packaging technology;
two lenses, each being combined on the corresponding light emitter respectively by the semiconductor packaging technology and being arranged between the diode laser and the touch-acting area, light emitted continuously from the diode laser being refracted by the lens to emit a diffused light to cover the touch-acting area for forming an interlaced touch screen; and
a plurality of receivers disposed on the touch panel about the touch-acting area respectively, where can receive the diffused light, to receive the diffused light.

2. The device as claimed in claim 1, wherein a section of the lens represents a cambered surface to make the diffused light represent straight-line shaped.

3. The device as claimed in claim 1, wherein a section of the lens represents a plurality of cambered surface to make the diffused light represent broken-line shaped.

4. The device as claimed in claim 1, wherein the lens is a Fresnel lens to make the diffused light represent dot-line shaped.

5. The device as claimed in claim 1, wherein the diffused light is invisible light comprising infrared light or ultraviolet light.

6. The device as claimed in claim 1, wherein the receivers are arranged about the touch-acting area to represent ┌┐ shaped.

7. An optical diode laser touch-control device, comprising:
a touch panel having a touch-acting area;
two diode lasers disposed on two adjacent corners of the touch panel respectively; and
two lens, each being arranged between the diode laser and the touch-acting area respectively and being combined with the diode laser by a semiconductor packaging technology, light emitted continuously from the diode laser being refracted by the lens to emit a diffused light to cover the touch-acting area for forming an interlaced touch screen.

8. The device as claimed in claim 7, further comprising a plurality of receivers disposed on the touch panel about the touch-acting area respectively, where can receive the diffused light, to receive the diffused light.

9. The device as claimed in claim 7, wherein a section of the lens represents a cambered surface to make the diffused light represent straight-line shaped.

10. The device as claimed in claim 7, wherein a section of the lens represents a plurality of cambered surface to make the diffused light represent broken-line shaped.

11. The device as claimed in claim 7, wherein the lens is a Fresnel lens to make the diffused light represent dot-line shaped.

12. The device as claimed in claim 7, wherein the diffused light is invisible light comprising infrared light or ultraviolet light.

13. The device as claimed in claim 7, wherein the receivers are arranged about the touch-acting area to represent ┌┐ shaped.

14. An optical diode laser touch-control device, comprising:
a touch panel having a touch-acting area;
two light emitters disposed on two adjacent corners of the touch panel respectively, each continuously emitting a diffused light to cover the touch-acting area for forming an interlaced touch screen; and
a plurality of receivers disposed on the touch panel about the touch-acting area respectively, where can receive the diffused light, to receive the diffused light.

15. The device as claimed in claim 14, wherein the diffused light represents straight-line shaped, broken-line shaped or dot-line shaped.

16. The device as claimed in claim 14, wherein the diffused light is invisible light comprising infrared light or ultraviolet light.

17. The device as claimed in claim 14, wherein the receivers are arranged about the touch-acting area to represent ┌┐ shaped.

## Amended claims

### Amended claims in accordance with Rule 137(2) EPC.

1. An optical diode laser touch-control device, comprising:
a touch panel (1) having a touch-acting area (10);
two light emitters (21, 22) disposed on two adjacent corners of the touch panel (1) respectively;
two diode lasers (211, 221), each being combined in the corresponding light emitter (21, 22) respectively by a semiconductor packaging technology;
two lenses (212, 222), each being combined on the corresponding light emitter (21, 22) respectively by the semiconductor packaging technology and being arranged between the diode laser (211, 221) and the touch-acting area (10), light emitted continuously from the diode laser (211, 221) being refracted by the lens (212, 222) to emit a diffused light (31, 32) to cover the touch-acting area (10) for forming an interlaced touch screen; and
a plurality of receivers (4) disposed on the touch panel (1) about the touch-acting area (10) respectively, where they can receive the diffused light (31, 32), to receive the diffused light (31, 32).

2. The device as claimed in claim 1, wherein a section of the lens (212, 222) represents a cambered surface to make the diffused light (31, 32) represent straight-line shaped.

3. The device as claimed in claim 1, wherein a section of the lens (212, 222) represents a plurality of cambered surfaces to make the diffused light (31, 32) represent broken-line shaped.

4. The device as claimed in claim 1, wherein the lens (212, 222) is a Fresnel lens to make the diffused light (31, 32) represent dot-line shaped.

5. The device as claimed in claim 1, wherein the diffused light (31, 32) is invisible light comprising infrared light or ultraviolet light.

6. The device as claimed in claim 1, wherein the receivers (4) are arranged about three peripheral sides of the touch-acting area (10).

7. The device as claimed in claim 1, wherein each said lens (212, 222) corresponding to each said diode laser (211, 221) comprises a single piece of lens.
